# EUROPEAN PATENT APPLICATION

(11) **EP 4 546 494 A1**
(43) Date of publication of application: **30.04.2025**
(21) Application number: 23859685.2
(22) Date of filing: 28.02.2023
(51) Int. Cl.: H01M 10/058, H01M 4/505, H01M 4/525, H01M 10/052, H01M 10/0562

(54) **METHOD FOR EVALUATING ALL-SOLID-STATE LITHIUM ION BATTERIES**

(30) Priority: 31.08.2022 JP 2022138371
(71) Applicant: JX Advanced Metals Corporation, Tokyo 105-8417 (JP)
(72) Inventor: YAMAMOTO,Shoichi, Kitaibaraki-shi, Ibaraki 319-1535 (JP)
(74) Representative: Yeadon IP Limited
(86) International application number: PCT/JP2023/007391
(87) International publication number: WO 2024/047912

(57) **Abstract**

A method for evaluating an all-solid-state lithium-ion battery including a solid electrolyte layer including an oxide-based solid electrolyte, a positive electrode layer including a positive electrode active material, and a negative electrode layer,
which evaluates the battery characteristics of the all-solid-state lithium-ion battery by comparing an X-ray diffraction pattern of a compact obtained by mixing and pressing the oxide-based solid electrolyte and the positive electrode active material with an X-ray diffraction pattern of a fired body obtained by firing the compact.

## Description

### FIELD OF THE INVENTION

The present invention relates to an evaluation method for all-solid-state lithium-ion batteries.

### BACKGROUND OF THE INVENTION

In recent years, with the rapid spread of information-related devices and communication devices such as personal computers, video cameras, and mobile phones, the development of batteries to be used as power sources for these devices has become important. Among these batteries, lithium-ion batteries have attracted attention from the viewpoint of their high energy density. In addition, there is a demand for improvements in the energy density and battery characteristics of lithium secondary batteries for large-scale applications such as vehicle-mounted power sources and load leveling.

LISICON-type oxide-based solid electrolytes are expected to be the next-generation solid electrolytes for all-solid batteries as solid materials that conduct Li ions. In addition, they have the advantage that it is possible to introduce Li deficiency or excess Li by replacing with ions of different valences, and it is possible to prepare materials that combine various elements.

Non-Patent Document 1 discloses that a cell was produced by combining a LISICON-type solid electrolyte, Li_{3.5}Ge_{0.5}V_{0.5}O₄, with a Ni-Co-Mn ternary positive electrode active material, NCM111 (a positive electrode active material containing Ni, Co, and Mn in a composition ratio of 1:1:1), and co-sintering the materials by spark plasma sintering, resulting in the production of a sintered body for a cell that exhibits stable charge/discharge behavior.

### CITATION LIST

### Non-patent literature

[Non-patent literature 1] Toyoki Okumura, Tomonari Takeuchi, and Hironori Kobayashi, All-solid Batteries with LiCoO2-Type Electrodes: Realization of an Impurity-Free Interface by Utilizing a Cosinterable Li3.5Ge0.5V0.5O4 Electrolyte, ACS Appl. Energy Mater. (2021), 4, 1, 30-34.

### SUMMARY OF THE INVENTION

Oxide-based all-solid-state lithium-ion batteries, which use non-flammable oxide-based solid electrolytes, are attracting attention as next-generation batteries that are significantly safer and more reliable than conventional lithium-ion batteries.

The battery characteristics of oxide-based all-solid-state batteries have been evaluated from various viewpoints. However, there is still room for development of a more efficient method for evaluating the battery characteristics of oxide-based all-solid-state batteries.

The present invention has been made to solve the above-mentioned problems, and an object of the present invention is to provide a method for efficiently evaluating the battery characteristics of an oxide-based all-solid-state battery.

The present invention, which has been completed based on the above findings, is defined by the following (1) to (3).
(1) A method for evaluating an all-solid-state lithium-ion battery including a solid electrolyte layer including an oxide-based solid electrolyte, a positive electrode layer including a positive electrode active material, and a negative electrode layer,
   which evaluates the battery characteristics of the all-solid-state lithium-ion battery by comparing an X-ray diffraction pattern of a compact obtained by mixing and pressing the oxide-based solid electrolyte and the positive electrode active material with an X-ray diffraction pattern of a fired body obtained by firing the compact.
(2) The method for evaluating an all-solid-state lithium-ion battery according to (1), which evaluates the battery characteristics of the all-solid-state lithium-ion battery by comparing an X-ray diffraction pattern of a compact obtained by mixing and pressing the oxide-based solid electrolyte and the positive electrode active material with an X-ray diffraction pattern of a fired body obtained by firing the compact, and determining that a reaction product between the oxide-based solid electrolyte and the positive electrode active material is generated if the X-ray diffraction patterns are different, and determining that a reaction product between the oxide-based solid electrolyte and the positive electrode active material is not generated if the X-ray diffraction patterns are identical.
(3) The method for evaluating an all-solid-state lithium ion battery according to claim (1) or (2), wherein the oxide-based solid electrolyte is represented by formula 1: Li_{α}AₓM_{y}O₄ (wherein A is Ge, Si or Ti, M is V, P or As, 3.25≦α≦3.75, 0.30≦x≦0.75, and 0.25≦y≦0.70), and
   the positive electrode active material is represented by formula 2: LiₐNi_{b}Co_{c}Mn_{d}O₂ (wherein in formula 2, 1.00≦a≦1.08, 0.60≦b≦0.90, and b+c+d=1.0).

According to the present invention, it is possible to provide a method for efficiently evaluating the battery characteristics of an oxide-based all-solid-state battery.

### BRIEF DESCRIPTION OF THE DRAWINGS

FIG. 1 is a schematic diagram of an all-solid-state lithium-ion battery according to an embodiment of the present invention.
FIG. 2 is an X-ray diffraction pattern according to Example 1.
FIG. 3 is an X-ray diffraction pattern according to Example 2.
FIG. 4 is an X-ray diffraction pattern according to Example 3.
FIG. 5 is an X-ray diffraction pattern according to Example 4.
FIG. 6 is an X-ray diffraction pattern according to Example 5.
FIG. 7 is an X-ray diffraction pattern according to Example 6.
FIG. 8 is an X-ray diffraction pattern according to Example 7.
FIG. 9 is an X-ray diffraction pattern according to Example 8.
FIG. 10 is an X-ray diffraction pattern according to Example 9.
FIG. 11 is an X-ray diffraction pattern according to Comparative Example 1.
FIG. 12 is an X-ray diffraction pattern according to Comparative Example 2.
FIG. 13 is an X-ray diffraction pattern according to Comparative Example 3.

### DETAILED DESCRIPTION OF THE INVENTION

Next, the embodiments of the present invention will be described in detail with reference to the drawings. It should be understood that the present invention is not limited to the following embodiments, and that appropriate changes and improvements in the design may be made based on the ordinary knowledge of those skilled in the art without departing from the spirit of the present invention.

### <Evaluation method for all-solid-state lithium-ion batteries>

The method for evaluating an all-solid-state lithium-ion battery according to an embodiment of the present invention is a method for evaluating an all-solid-state lithium-ion battery including a solid electrolyte layer including an oxide-based solid electrolyte, a positive electrode layer including a positive electrode active material, and a negative electrode layer, and evaluates the battery characteristics of the all-solid-state lithium-ion battery by comparing an X-ray diffraction pattern of a compact obtained by mixing and pressing the oxide-based solid electrolyte and the positive electrode active material with an X-ray diffraction pattern of a fired body obtained by firing the compact.

As a specific example of a method for evaluating an all-solid-state lithium-ion battery according to an embodiment of the present invention, first, the positive electrode active material and the oxide-based solid electrolyte are weighed out to a predetermined mass ratio, and then gently mixed by hand in a mortar and pestle to obtain a positive electrode material/solid electrolyte mixed powder. The obtained mixed powder is then pressed and molded, for example, at 300-400 MPa to produce a mixed powder compact. The obtained compact is then placed on an alumina boat covered with gold foil, and fired, for example, at 700-900°C for 1-3 hours, after which the fired body obtained is crushed in a mortar and pestle. The fired mixed powder thus obtained is subjected to the reactivity evaluation (XRD evaluation) shown below.

That is, the reactivity between the positive electrode active material and the solid electrolyte of the all-solid-state lithium-ion battery is analyzed by powder X-ray diffraction method: XRD (θ/2θ method) under the following conditions. If the X-ray diffraction pattern of the positive electrode material/solid electrolyte mixed powder is different before and after firing, it means that a new peak is generated after firing or a peak that existed before firing disappears, so it can be evaluated that a reaction product between the positive electrode active material and the oxide-based solid electrolyte (NCM) is "present". On the other hand, if the X-ray diffraction patterns obtained are the same, it can be evaluated that a reaction product between the positive electrode active material and the oxide-based solid electrolyte (NCM) is "absent".
- X-ray diffraction device: SmartLab made by Rigaku Corporation
- Light source: CuKα radiation
- Voltage: 40 kV
- Current: 30 mA

In this way, the reactivity between the positive electrode active material and the oxide-based solid electrolyte (NCM) can be evaluated, and if the reaction product is evaluated as "absent", it can be evaluated that the battery characteristics of the all-solid-state lithium-ion battery are good. This allows the battery characteristics of the all-solid-state lithium-ion battery to be evaluated efficiently.

### <All-solid-state lithium-ion battery>

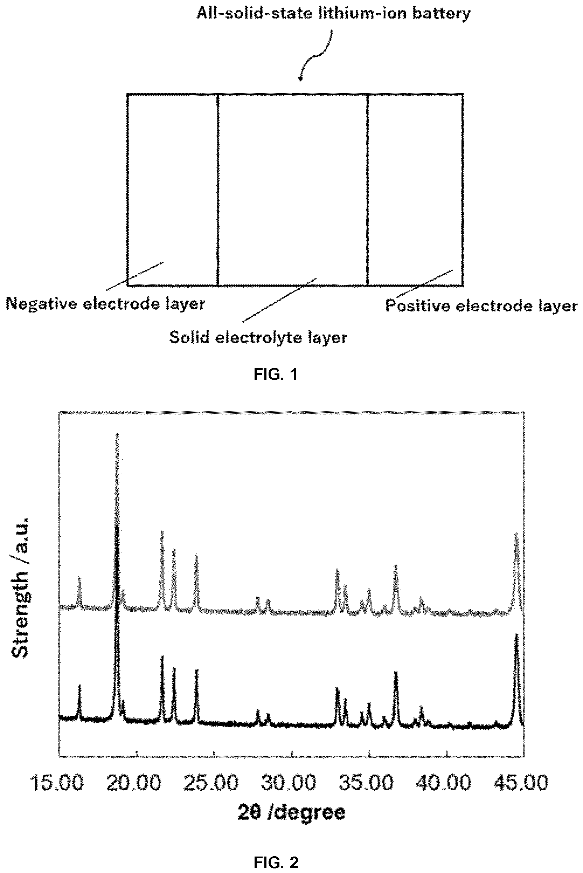

The all-solid-state lithium-ion battery to be evaluated in the evaluation method of the all-solid-state lithium-ion battery according to the embodiment of the present invention includes a solid electrolyte layer containing an oxide-based solid electrolyte, a positive electrode layer containing a positive electrode active material, and a negative electrode layer. The all-solid-state lithium-ion battery can be configured as shown in Figure 1.

### (Solid electrolyte layer)

The composition of the solid electrolyte layer of this embodiment is not particularly limited, but includes, for example, an oxide-based solid electrolyte represented by the composition formula 1: Li_{α}AₓM_{y}O₄ (in the composition formula 1, A is Ge, Si or Ti, M is V, P or As, 3.25≦α≦3.75, 0.30≦x≦0.75, and 0.25≦y≦0.70). The oxide-based solid electrolyte of this embodiment has a base material of Li_{α}GeₓV_{y}O₄, which is a LISICON-type solid electrolyte, or a composition in which Si, Ti, P or As is substituted for the base material. With this configuration, the number of elements constituting the oxide-based solid electrolyte is increased, and the activation energy is reduced, resulting in an oxide-based solid electrolyte with good ion conductivity. As a result, the capacity of the all-solid-state lithium-ion battery is increased. In the present invention, an oxide-based solid electrolyte refers to a solid electrolyte having an oxoacid ion in the skeleton, in which an oxygen atom is coordinately bonded to a central element, as a counter anion to a lithium ion.

In the oxide-based solid electrolyte of this embodiment, if α is less than 3.25 in the above composition formula 1, there is a risk of a problem in that the ion conductivity decreases due to a low carrier concentration. Furthermore, if α exceeds 3.75, there is a risk of a problem in that single-phase synthesis becomes difficult. In the oxide-based solid electrolyte of this embodiment, it is preferable that 3.4≦α≦3.7 in the above composition formula 1.

In the oxide-based solid electrolyte of this embodiment, if x is less than 0.30 in the above composition formula 1, there is a risk of a Li₄GeO₄ phase with low ionic conductivity being generated. Furthermore, if x is more than 0.75, the crystal lattice becomes large, the distance between Li sites becomes long, and there is a risk of a decrease in ionic conductivity. In the oxide-based solid electrolyte of this embodiment, it is preferable that 0.4≦x≦0.6 in the above composition formula.

In the oxide-based solid electrolyte of this embodiment, if y is less than 0.25 in the above composition formula 1, there is a risk of a small effect of improving ionic conductivity because the effect of reducing activation energy by element substitution is weak. Furthermore, if y is more than 0.70, there is a risk of an impurity phase such as Li₄VO₄ being generated, and there is a risk of a decrease in ionic conductivity. In the oxide-based solid electrolyte of this embodiment, it is preferable that 0.3≦y≦0.6 in the above composition formula.

The average particle size of the oxide-based solid electrolyte of this embodiment is not particularly limited, but may be 0.01 to 100 µm, 0.1 to 100 µm, or 0.1 to 50 µm.

The oxide-based solid electrolyte of this embodiment can be produced as follows.

First, raw materials are weighed out to obtain a predetermined composition in a glove box in an atmosphere of an inert gas such as argon gas or nitrogen gas. Examples of the raw materials used here include LiOH.H₂O, GeO₂, V₂O₅, SiO₂, TiO₂, H₃PO₄, and H₃AsO₃.

Then, mix in a mortar or the like for 5 to 30 minutes to produce a mixed powder. At this time, it is preferable to mix for a time such that the average particle size of the mixed powder becomes 5 to 40 µm.

Then, place the mixed powder in an alumina sagger and sinter at 600 to 1000°C for 1 to 20 hours to produce the oxide-based solid electrolyte of this embodiment, represented by composition formula 1: Li_{α}AₓM_{y}O₄ (in composition formula 1, A is Ge, Si or Ti, M is V, P or As, 3.25≦α≦3.75, 0.30≦x≦0.75, and 0.25≦y≦0.70).

The average thickness of the solid electrolyte layer of the lithium ion battery formed by the oxide-based solid electrolyte of this embodiment is not particularly limited and can be designed appropriately according to the purpose. The average thickness of the solid electrolyte layer of this embodiment may be, for example, 50 µm to 500 µm, or 50 µm to 100 µm.

The method for forming the solid electrolyte layer of this embodiment is not particularly limited and can be appropriately selected depending on the purpose. Examples of the method for forming the solid electrolyte layer of this embodiment include sputtering using a target material for the solid electrolyte, or a method of compression molding the solid electrolyte.

### (Positive electrode layer)

The composition of the positive electrode active material contained in the positive electrode layer of the present embodiment is not particularly limited, and is represented, for example, by composition formula 2: LiaNi_{b}Co_{c}Mn_{d}O₂ (in composition formula 2, 1.00≦a≦1.08, 0.60≦b≦0.90, and b+c+d=1.0). More specifically, as the positive electrode layer of this embodiment, a layer of a positive electrode mixture, formed by mixing the positive electrode active material represented by the composition formula 2 and the oxide-based solid electrolyte of this embodiment, can be used. The content of the positive electrode active material in the positive electrode layer is, for example, preferably 50% by mass or more and 99% by mass or less, and more preferably 60% by mass or more and 90% by mass or less.

The positive electrode active material of this embodiment is a high-nickel NCM positive electrode active material having a high Ni ratio of 0.60 to 0.90, as shown in the above composition formula 2, and when such a high-nickel positive electrode active material is used, the capacity of the all-solid lithium-ion battery is generally high. From this viewpoint, it is more preferable that 0.80≦b≦0.90 in the above composition formula 2. The positive electrode active material of this embodiment is not particularly limited as long as it satisfies the above composition formula 2, and a known positive electrode active material can be used.

Conventionally, high-nickel NCM positive electrode active materials with a high Ni ratio of 0.60 to 0.90 have had the problem that they react with solid electrolytes to generate reactants that do not conduct Li ions, and thus do not function as batteries. Such high-nickel NCM positive electrode active materials do not generate reactants with the oxide-based solid electrolyte represented by the above composition formula 1. For this reason, an all-solid lithium ion battery having an oxide-based solid electrolyte represented by the above composition formula 1 in the solid electrolyte layer and a high-nickel NCM positive electrode active material represented by the above composition formula 2 in the positive electrode layer can provide an oxide-based all-solid battery that achieves high capacity.

The positive electrode mixture may further include a conductive auxiliary agent. As the conductive auxiliary agent, a carbon material, a metal material, or a mixture thereof may be used. The conductive auxiliary agent may include at least one element selected from the group consisting of, for example, carbon, nickel, copper, aluminum, indium, silver, cobalt, magnesium, lithium, chromium, gold, ruthenium, platinum, beryllium, iridium, molybdenum, niobium, osmium, rhodium, tungsten, and zinc. The conductive auxiliary agent is preferably a highly conductive carbon element, a metal element, a mixture, or a compound containing carbon, nickel, copper, silver, cobalt, magnesium, lithium, ruthenium, gold, platinum, niobium, osmium, or rhodium. As the carbon material, for example, carbon black such as Ketjen Black, acetylene black, denka black, thermal black, and channel black, graphite, carbon fiber, activated carbon, and the like may be used.

The average thickness of the positive electrode layer of the all-solid lithium ion battery is not particularly limited and can be appropriately designed according to the purpose. The average thickness of the positive electrode layer of the all-solid lithium ion battery may be, for example, 1 µm to 100 µm, or 1 µm to 10 µm.

The method for forming the positive electrode layer of the all-solid lithium ion battery is not particularly limited and can be appropriately selected depending on the purpose. For example, the method for forming the positive electrode layer of the all-solid lithium ion battery includes a method of compression molding the positive electrode active material for the all-solid lithium ion battery.

### (Negative electrode layer)

The negative electrode layer of the all-solid lithium-ion battery is not particularly limited, and may be formed in a layer of a known negative electrode active material for all-solid lithium-ion batteries. The negative electrode layer may also be formed in a layer of a negative electrode composite material obtained by mixing a known negative electrode active material for all-solid lithium-ion batteries with a solid electrolyte. The content of the negative electrode active material in the negative electrode layer is, for example, preferably 10% by mass or more and 99% by mass or less, and more preferably 20% by mass or more and 90% by mass or less.

The negative electrode layer may contain a conductive auxiliary agent, similar to the positive electrode layer. The conductive auxiliary agent may be the same material as that described for the positive electrode layer. Examples of the negative electrode active material include carbon materials, specifically, artificial graphite, graphite carbon fiber, resin-sintered carbon, pyrolytic vapor-grown carbon, coke, mesocarbon microbeads (MCMB), furfuryl alcohol resin-sintered carbon, polyacene, pitch-based carbon fiber, vapor-grown carbon fiber, natural graphite, and non-graphitizable carbon, or mixtures thereof. Examples of the negative electrode material include metals such as lithium metal, indium metal, aluminum metal, and silicon metal, and alloys of the metals combined with other elements and compounds.

The average thickness of the negative electrode layer of the all-solid lithium ion battery is not particularly limited, and can be appropriately selected depending on the purpose. The average thickness of the negative electrode layer of the all-solid lithium ion battery may be, for example, 1 µm to 100 µm, or 1 µm to 10 µm.

The method of forming the negative electrode layer of the all-solid lithium ion battery is not particularly limited, and can be appropriately selected depending on the purpose. Methods for forming the negative electrode layer of an all-solid lithium ion battery include, for example, a method of compression molding negative electrode active material particles and a method of vapor-depositing negative electrode active material.

The other members constituting the lithium ion battery are not particularly limited and can be appropriately selected depending on the purpose, and examples include a positive electrode current collector, a negative electrode current collector, and a battery case.

The size and structure of the positive electrode current collector are not particularly limited and can be appropriately selected depending on the purpose.

Examples of the material for the positive electrode current collector include die steel, stainless steel, aluminum, aluminum alloy, titanium alloy, copper, gold, and nickel.

Examples of the shape of the positive electrode current collector include foil, plate, and mesh.

The average thickness of the positive electrode current collector may be, for example, 10 µm to 500 µm, or 50 µm to 100 µm.

The size and structure of the negative electrode current collector are not particularly limited and can be appropriately selected depending on the purpose.

Examples of the material of the negative electrode current collector include die steel, gold, indium, nickel, copper, and stainless steel.

Examples of the shape of the negative electrode current collector include foil, plate, and mesh.

The average thickness of the negative electrode current collector may be, for example, 10 µm to 500 µm, or 50 µm to 100 µm.

The battery case is not particularly limited and can be appropriately selected depending on the purpose, for example, known laminate films that can be used in conventional all-solid batteries. Examples of laminate films include resin laminate films and films in which metal is vapor-deposited on resin laminate films.

The shape of the battery is not particularly limited and can be appropriately selected depending on the purpose, for example, cylindrical, square, button, coin, and flat types.

### EXAMPLES

The following examples are provided to provide a better understanding of the present invention and its advantages, but the present invention is not limited to these examples.

### <1. Preparation of oxide-based solid electrolyte>

### (Examples 1-4)

In a glove box with an argon atmosphere, the raw materials were weighed so that the raw material composition was the stoichiometric composition of the target compound, and mixed in a mortar for 15 minutes to prepare a mixed powder. Next, about 2 g of the mixed powder was placed on an alumina boat, calcined at 600°C for 12 hours, and crushed by hand in the mortar to obtain a calcined powder. After that, about 1 g of the calcined powder was placed again on the alumina boat and calcined at 700°C for 12 hours to obtain an oxide-based solid electrolyte having a composition of Li_{3.5}Ge_{0.5}V_{0.5}O₄.

### (Example 5)

In a glove box with an argon atmosphere, the raw materials were weighed so that the raw material composition was the stoichiometric composition of the target compound, and the same manufacturing method as in Example 1 was carried out to obtain an oxide-based solid electrolyte having a composition of Li_{3.6}Ge_{0.6}V_{0.4}O₄.

### (Example 6)

In a glove box with an argon atmosphere, the raw materials were weighed so that the raw material composition was the stoichiometric composition of the target compound, and the same manufacturing method as in Example 1 was carried out to obtain an oxide-based solid electrolyte having a composition of Li_{3.7}Ge_{0.7}V_{0.3}O₄.

### (Example 7)

In a glove box with an argon atmosphere, the raw materials were weighed so that the raw material composition was the stoichiometric composition of the target compound, and the same manufacturing method as in Example 1 was carried out to obtain an oxide-based solid electrolyte having a composition of Li_{3.3}Ge_{0.3}V_{0.7}O₄.

### (Example 8)

In a glove box with an argon atmosphere, the raw materials were weighed so that the raw material composition was the stoichiometric composition of the target compound, and the same manufacturing method as in Example 1 was carried out to obtain an oxide-based solid electrolyte having a composition of Li_{3.75}Ge_{0.75}P_{0.25}O₄.

### (Example 9)

In a glove box with an argon atmosphere, raw materials were weighed so that the raw material composition was the stoichiometric composition of the target compound, and a manufacturing method similar to that of Example 1 was carried out to obtain an oxide-based solid electrolyte having a composition of Li_{3.5}Ti_{0.5}V_{0.5}O₄.

### (Comparative Example 1)

An oxide-based solid electrolyte having a composition of Li_{6.25}Al_{0.25}La₃Zr₂O₁₂ was prepared.

### (Comparative Example 2)

An oxide-based solid electrolyte having a composition of Li_{0.33}La_{0.56}TiO₃ was prepared.

### (Comparative Example 3)

An oxide-based solid electrolyte having a composition of Li_{1.3}Al_{0.3}Ti_{1.7}(PO₄)₃ was prepared.

### <2. Preparation of positive electrode active material>

### (Example 1)

A positive electrode active material having a composition of LiNi_{0.6}CO_{0.2}Mn_{0.2}O₂ was prepared.

### (Examples 2, 3, 5-9, Comparative Examples 1-3)

A positive electrode active material having a composition of LiNi_{0.82}Co_{0.15}Mn_{0.03}O₂ was prepared.

### (Example 4)

A positive electrode active material having a composition of LiNi_{0.9}Co_{0.07}Mn_{0.03}O₂ was prepared.

The composition of the positive electrode active materials prepared in Examples 1-9 and Comparative Examples 1-3 was evaluated as follows. That is, 5 g of each positive electrode active material sample (powder) was weighed out, decomposed by the alkali fusion method, and then analyzed for composition using an inductively coupled plasma optical emission spectrometer (ICP-OES) "PS7800" manufactured by Hitachi High-Tech Corporation. The oxygen content was obtained by subtracting the analysis values of Li and metal components, as well as the impurity concentration and residual alkali amount, from the total amount of the analyzed sample, and the z value of the oxygen composition (O_{z}) was calculated from the oxygen content.

### <3. Evaluation of reactivity between positive electrode active material and solid electrolyte (XRD evaluation)>

### (Examples 1 to 9, Comparative Examples 1 to 3)

The obtained positive electrode active material and oxide-based solid electrolyte were weighed so that the mass ratio was 1:1, and gently mixed by hand in a mortar and pestle to obtain a positive electrode material/solid electrolyte mixed powder. The obtained mixed powder was pressed and molded at 333 MPa to produce a mixed powder compact. Next, the obtained compact was placed on an alumina boat covered with gold foil and sintered at 800°C for 2 hours, after which the obtained sintered body was crushed in a mortar and pestle. The mixed sintered powder thus obtained was subjected to the following reactivity evaluation (XRD evaluation).

That is, the reactivity between the positive electrode active material and the solid electrolyte of Examples 1 to 9 and Comparative Examples 1 to 3 was analyzed by powder X-ray diffraction method: XRD (θ/2θ method) under the following conditions. If the obtained X-ray diffraction pattern of the positive electrode material/solid electrolyte mixed powder is different before and after sintering, it means that a new peak is generated after sintering or the peak that existed before sintering disappears, so it was evaluated as "present" as a reaction product between the positive electrode active material and the oxide-based solid electrolyte (NCM). On the other hand, if the obtained X-ray diffraction patterns are the same, it was evaluated as "absent" as a reaction product between the positive electrode active material and the oxide-based solid electrolyte (NCM).
X-ray diffraction device: SmartLab manufactured by Rigaku Corporation
Light source: CuKα radiation
Voltage: 40 kV
Current: 30 mA

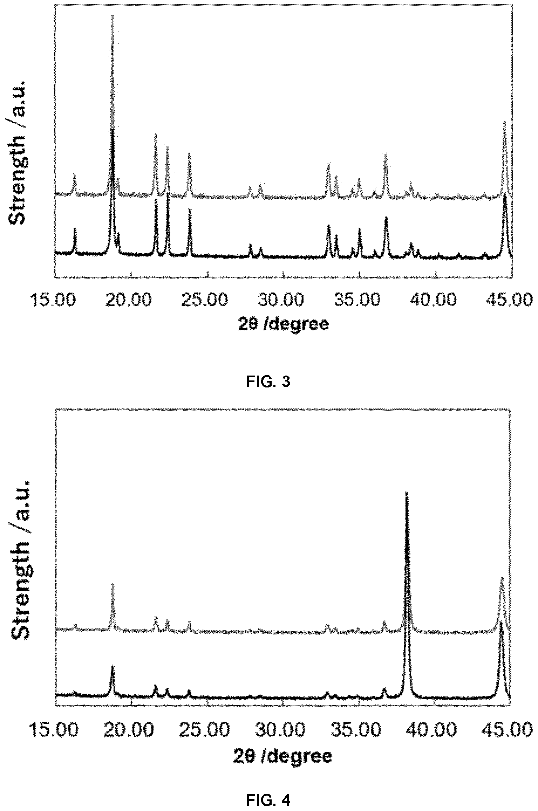

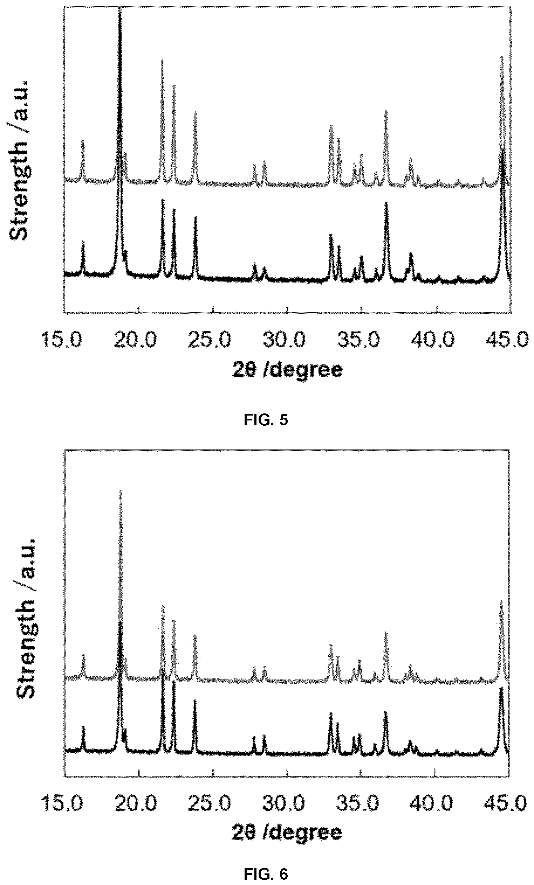

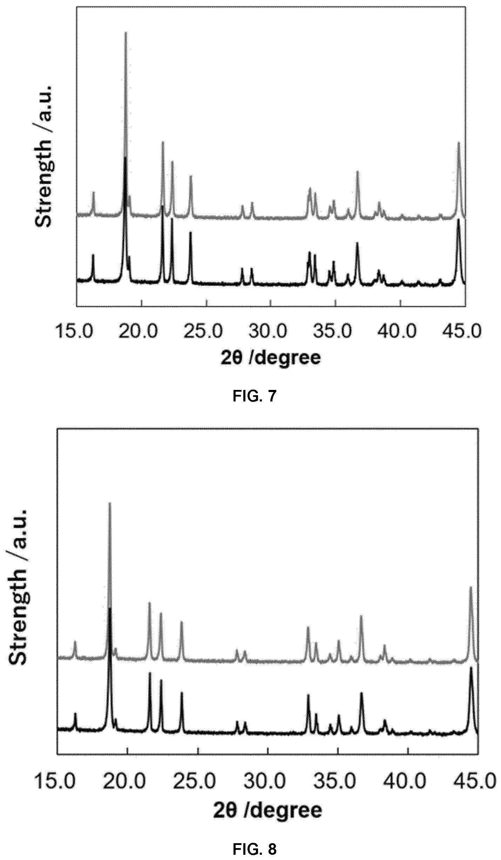

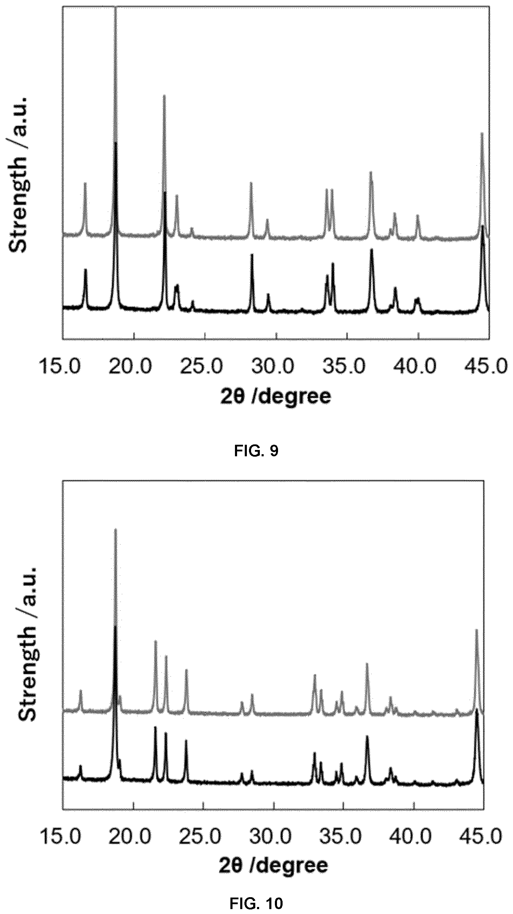

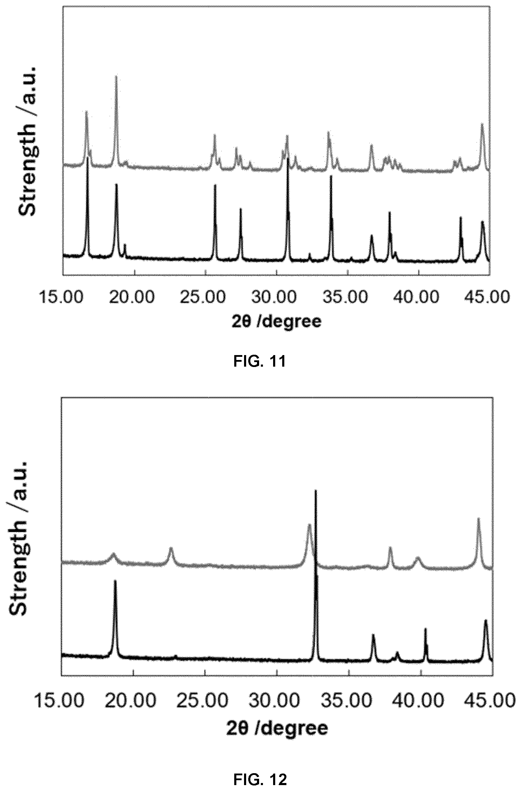

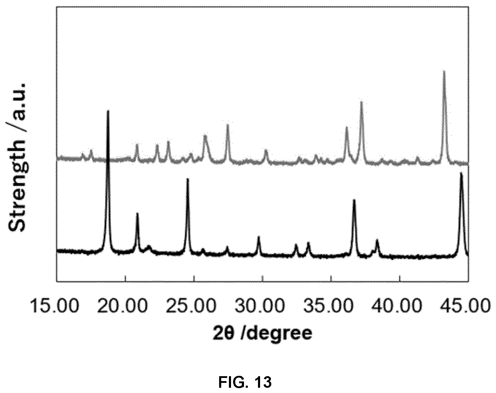

The X-ray diffraction patterns obtained here for Examples 1 to 9 and Comparative Examples 1 to 3 are shown in Figures 2 to 13, respectively. In all of Figures 2 to 13, the X-ray diffraction patterns are shown aligned vertically, with the lower X-ray diffraction pattern showing the pattern before firing and the upper X-ray diffraction pattern showing the pattern after firing. In Figures 2 to 10 (Examples 1 to 9), it can be seen that the upper and lower X-ray diffraction patterns (X-ray diffraction patterns before and after firing) are the same. On the other hand, in Figures 11 to 13 (Comparative Examples 1 to 3), the upper and lower X-ray diffraction patterns (X-ray diffraction patterns before and after firing) are different, and it can be seen that new peaks are generated after firing, or peaks that existed before firing have disappeared.

### <4. Preparation of all-solid lithium-ion battery>

### (Examples 1-9, Comparative Examples 1-3)

The obtained positive electrode active material, oxide-based solid electrolyte, and binder were mixed in this order in a mass ratio of 50:50:5, and anisole was added as a solvent so that the solid content of the slurry was about 55 mass%, and the mixture was mixed in a Mazerustar for 400 seconds to prepare a positive electrode composite slurry. The solvent of the obtained slurry was dried at room temperature, and then crushed in a mortar and pestle to obtain a positive electrode composite powder.

In addition, for Example 3, gold powder was added as a conductive auxiliary agent to the raw materials of the positive electrode composite slurry in an amount twice the amount of the positive electrode material.

Next, about 10 mg of the above-mentioned positive electrode composite powder was placed on the temporarily pressed oxide-based solid electrolyte, and pressed at 333 MPa to prepare a laminate of a solid electrolyte layer/positive electrode composite layer.

Next, the laminate was placed on an MgO or ZrO₂ setter and sintered at 800°C for 2 hours to produce a sintered body of the solid electrolyte layer/cathode composite layer.

Next, a polymer solid electrolyte and metallic Li were pressed onto the negative electrode side of the solid electrolyte layer to form the negative electrode layer. The laminate thus produced was placed in a sealed SUS304 battery test cell to block the atmosphere, and a confining pressure of 0.4 Nm was applied to produce an all-solid secondary battery. In this way, an all-solid lithium-ion battery was produced.

### <5. Composition evaluation of oxide-based solid electrolytes>

0.5 g of each oxide-based solid electrolyte sample (powder) obtained in Examples 1 to 9 and Comparative Examples 1 to 3 was weighed out and dissolved using various acids, and then a composition analysis was performed using an inductively coupled plasma optical emission spectrometer (ICP-OES) "PS7800" manufactured by Hitachi High-Tech Corporation.

### <6. Charge/Discharge Test>

The initial charge/discharge capacity of each of the all-solid lithium-ion batteries of Examples 1 to 9 and Comparative Examples 1 to 3 was evaluated by initially charging and discharging at 0.05 C at 60°C. Note that in Comparative Examples 1 to 3, no capacity was obtained, so they were marked as N/D.
The above manufacturing conditions and test results are shown in Table 1.

**[Table 1]**

| | **Solid electrolyte composition** | **NCM positive electrode active material composition** | **Conductive auxiliary agent added (Au powder)** | **XRD evaluation Reaction with NCM** | **Charge/discharge test (60°C)** | |
|---|---|---|---|---|---|---|
| | | | | | **Initial charge capacity [mAh/g]** | **Initial discharge capacity [mAh/g]** |
| | | | **A: present** | **A: absent** | | |
| | | | **B: absent** | **B: present** | | |
| **EX.1** | **Li3.5Ge0.5v0.5O4** | **LiNi0.6Co0.2Mn0.2O2** | **B** | **A** | **169.8** | **159.5** |
| **EX.2** | | **LiNi0.82Co0.15Mn0.03O2** | **B** | **A** | **178.9** | **166.0** |
| **EX.3** | | | **A** | **A** | **189.0** | **172.5** |
| **EX.4** | | **LiNi0.9Co0.07Mn0.03O2** | **B** | **A** | **167.7** | **158.7** |
| **EX.5** | **Li3.6Ge0.6V0.4O4** | **LiNi0.82Co0.15Mn0.03O2** | **B** | **A** | **171.8** | **143.2** |
| **EX.6** | **Li3.7Ge0.7V0.3O4** | | **B** | **A** | **157.8** | **145.2** |
| **EX.7** | **Li3.3Ge0.3V0.7O4** | | **B** | **A** | **145.5** | **127.8** |
| **EX.8** | **Li3.75Ge0.75P0.25O4** | | **B** | **A** | **164.7** | **152.9** |
| **EX.9** | **Li3.5Ti0.5V0.5O4** | | **B** | **A** | **157.3** | **134.7** |
| | | | | | | |
| **Comp.1** | **Li6.25Al0.25La3Zr2O12** | **LiNi0.82Co0.15Mn0.03O2** | **B** | **B** | **N/D** | **N/D** |
| **Comp.2** | **Li0.33La0.56TiO3** | | **B** | **B** | **N/D** | **N/D** |
| **Comp.3** | **Li1.3Al0.3Ti1.7(PO4)3** | | **B** | **B** | **N/D** | **N/D** |

### (Evaluation Results)

In all of Examples 1 to 9, the X-ray diffraction patterns of the compact obtained by mixing and pressing an oxide-based solid electrolyte and a positive electrode active material were compared with the X-ray diffraction patterns of the fired body obtained by firing the compact. Since the X-ray diffraction patterns were identical, it was determined that no reaction product was generated between the oxide-based solid electrolyte and the positive electrode active material. If the reaction product was not generated, it was evaluated that the battery characteristics of the all-solid-state battery were good, and the charge/discharge capacity of the all-solid-state battery was actually measured, and the result was good.

In all of Comparative Examples 1 to 3, the X-ray diffraction patterns of the compact obtained by mixing and pressing an oxide-based solid electrolyte and a positive electrode active material were compared with the X-ray diffraction patterns of the fired body obtained by firing the compact. Since the X-ray diffraction patterns were different, it was determined that a reaction product was generated between the oxide-based solid electrolyte and the positive electrode active material. If the reaction product was generated, it was evaluated that the battery characteristics of the all-solid-state battery were poor, and the charge/discharge capacity of the all-solid-state battery was actually measured, and the result was that no capacity was obtained.

From the above, it was found that the evaluation method for all-solid-state lithium-ion batteries according to the present invention makes it possible to efficiently evaluate the battery characteristics of oxide-based all-solid-state batteries.

## Claims

1. A method for evaluating an all-solid-state lithium-ion battery including a solid electrolyte layer including an oxide-based solid electrolyte, a positive electrode layer including a positive electrode active material, and a negative electrode layer,
which evaluates the battery characteristics of the all-solid-state lithium-ion battery by comparing an X-ray diffraction pattern of a compact obtained by mixing and pressing the oxide-based solid electrolyte and the positive electrode active material with an X-ray diffraction pattern of a fired body obtained by firing the compact.

2. The method for evaluating an all-solid-state lithium-ion battery according to claim 1, which evaluates the battery characteristics of the all-solid-state lithium-ion battery by comparing an X-ray diffraction pattern of a compact obtained by mixing and pressing the oxide-based solid electrolyte and the positive electrode active material with an X-ray diffraction pattern of a fired body obtained by firing the compact, and determining that a reaction product between the oxide-based solid electrolyte and the positive electrode active material is generated if the X-ray diffraction patterns are different, and determining that a reaction product between the oxide-based solid electrolyte and the positive electrode active material is not generated if the X-ray diffraction patterns are identical.

3. The method for evaluating an all-solid-state lithium ion battery according to claim 1 or 2, wherein the oxide-based solid electrolyte is represented by formula 1: Li_{α}AₓM_{y}O₄ (wherein A is Ge, Si or Ti, M is V, P or As, 3.25≦α≦3.75, 0.30≦x≦0.75, and 0.25≦y≦0.70), and
the positive electrode active material is represented by formula 2: LiₐNi_{b}Co_{c}Mn_{d}O₂ (wherein in formula 2, 1.00≦a≦1.08, 0.60≦b≦0.90, and b+c+d=1.0).
